# EUROPÄISCHE PATENTSCHRIFT

(11) **EP 1 726 204 B1**
(45) Veröffentlichungstag und Bekanntmachung des Hinweises auf die Patenterteilung: **25.02.2009**
(21) Anmeldenummer: 06010460.1
(22) Anmeldetag: 20.05.2006
(51) Int. Cl.: A01F 15/07

(54) **Vorrichtung zum Pressen und Umhüllen von Rundballen**
Apparatus for pressing and wrapping round bales
Presse et appareil pour envelopper des balles rondes

(30) Priorität: 27.05.2005 DE 202005008468 U
(43) Veröffentlichungstag der Anmeldung: 29.11.2006
(73) Patentinhaber: Maschinenfabrik Bernard Krone GmbH, 48480 Spelle (DE)
(72) Erfinder: Krone, Bernard, Dr.-Ing. E.h., 48480 Spelle (DE); van Bassen, Aloys, 49832 Freren (DE); Schulz, Stephan, Dipl.-Ing., 48369 Saerbeck (DE)

(56) Entgegenhaltungen:
- EP-A- 0 983 720
- EP-A- 1 266 563
- GB-A- 2 337 245
- US-A- 5 822 967
- US-A1- 2004 083 905

## Beschreibung

Die Erfindung betrifft eine Vorrichtung zum Pressen und Umhüllen von Rundballen, insbesondere aus angewelktem Grüngut, Heu, Stroh oder ähnlichen landwirtschaftlichen Halmgütern nach dem Oberbegriff des Anspruches 1. Gattungsgemäße Vorrichtungen der oben genannten Art sind in vielfältigen Ausführungsformen aus der Landwirtschaft als Press- Wickelkombinationen bekannt. Gegenüber ebenfalls bekannten Press- Wickelmaschinen, bei denen der Ballen in der Presskammer auch komplett umwickelt wird, werden die Kombinationen mit getrennten Press- und Wickelstationen bevorzugt eingesetzt, weil mit ihnen gleichzeitig gepresst und gewickelt werden kann und somit ein wesentlich größerer Durchsatz erzielt wird.

Bei allen Press- Wickelkombinationen mit separater Wickelstation ist jedoch die Ballenübergabe von der Presskammer auf den Wickeltisch der Wickelstation eine besonders zu beachtende Problematik, weil insbesondere die Betriebssicherheit unter allen Einsatzbedingungen und die Wirtschaftlichkeit der Maschine davon stark beeinflusst werden.

Aus der DE 197 31 520 A1 ist beispielsweise eine Ausführungsform der Ballenübergabe bekannt, bei der der aus der Presskammer ausgeworfene Ballen direkt von dem Wickeltisch aufgenommen wird, welcher zuvor in eine Position unterhalb der Auswurföffnung der Rundballenpresse verfahren wurde. Anschließend wird der Wickeltisch mit dem aufgenommenen Ballen in die Wickelposition verfahren. Nachteilig an dieser Ausführung ist zum einen die unzureichende Führung und Sicherung des Ballen während der Übergabe und des Verfahrens des Tisches in seine Wickelposition. Des weiteren nachteilig wirkt sich der sehr hohe konstruktive Aufwand für den Antrieb und die Führung des Wickeltisches einhergehend mit einem hohen Maschinengewicht und hohen Fertigungskosten aus.

Eine weitere bekannte Ausführungsform einer Übergabeeinrichtung ist aus der

EP 0 983 720 A1 bekannt. Es wird eine Auffangeinrichtung vorgeschlagen, welche zwischen der Rundballenpresse und der Wickelvorrichtung in der Form einer drehbaren Auffanggabel angeordnet ist. Die mit seitlichen Führungen versehene Auffanggabel ist um eine nahe der Wickelvorrichtung liegende Achse drehbar am Grundrahmen der Wickelkombination gelagert. Nach dem Öffnen der rückwärtigen Klappe der Rundballenpresse wird der Rundballen sicher von der Auffanggabel aufgenommen, wobei die seitlichen Führungsstangen und die ausgeprägte Muldenform der Auffanggabel auch in extremeren Hanglagen den Ballen sicher zentrieren und führen. Mittels einer Hydraulik wird sodann die Auffanggabel hochgeschwenkt, wodurch der Ballen auf den Wickeltisch übergeben wird. Eine höhenverstellbare Auffangrolle am Wickeltisch verhindert dabei, dass der Ballen in steilerem Gelände über den Wickeltisch hinausrollt.

Die zuvor beschriebene, aus der EP 0 983 720 A1 bekannte Ausführungsform ermöglicht auch unter schwierigen Bedingungen in Hanglagen eine sichere Ballenübergabe an den Wickeltisch. Nachteilig an dieser Lösung ist jedoch zu sehen, dass das gesamte Ballengewicht von der Auffanggabel aufgenommen und gehoben werden muß, was zu einer entsprechend großen Dimensionierung der Hydraulik, des Schwenkantriebes und der Rahmenbauteile und damit zu hohen Kosten führt.

Eine weitere Ausführung einer Beladeeinrichtung für einen Wickeltisch wird in der GB-A-2337245 beschrieben. Hierbei handelt es sich jedoch um eine gezogene Ballenwickelmaschine, welche auf dem Feld abgelegte Erntegutballen mit einer Beladeeinrichtung aufnimmt und auf dem Wickeltisch ablegt, wobei auch ihr die zuvor beschriebenen, aus der EP 0 983 720 A1 bekannten Nachteile anhaften. Des weiteren bietet die offenbarte Lösung keinerlei Mittel zur Festlegung bzw. Sicherung des auf dem Wickeltisch abgelegten Ballens in Hanglagen.

Der vorliegenden Erfindung liegt die Aufgabe zugrunde, eine Vorrichtung zum Pressen und Umhüllen von Rundballen zu schaffen, bei der mittels einer konstruktiv einfachen und kostengünstig herstellbaren Übergabeeinrichtung eine sichere und schnelle Übergabe, auch unterschiedlich großer Rundballen, von der Presse an die Wickeleinrichtung gewährleistet ist.

Zur Lösung der gestellten Aufgabe zeichnet sich die eingangs beschriebene Vorrichtung durch die im Anspruch 1 angegebenen Merkmale aus. Hinsichtlich der weiteren Ausgestaltung der Erfindung wird auf die weiteren Ansprüche verwiesen.

Die Übergabeeinrichtung einer erfindungsgemäßen Press- Wickelkombination ist vorzugsweise derart gestaltet, dass der fertig gepresste Ballen durch die, durch das Öffnen der rückwärtigen Gehäuseklappe freigegebenen Auswurföffnung direkt auf einer festen, nicht beweglichen, rahmenfesten Auflage in den Übergabebereich zwischen Ballenpresse und Wickeleinrichtung rollt. Spätestens aus dieser Position wird der Ballen unterstützt durch einen kraftbetätigten Schwenkbügel weiterhin auf der starren Auflage rollend oder gleitend in Richtung Wickeltisch befördert und von diesem aufgenommen. Bei der festen Auflage ist es dabei unerheblich, ob es sich um in Transportrichtung ausgerichtete Schienen oder um ein entsprechend geformtes Blech handelt, welches einen geschlossenen Übergabetisch bildet. Die Auflage erfüllt in jedem Fall eine vorteilhafte Doppelfunktion, welche eine sehr einfache und gewichtssparende Ausführung des Grundrahmens der Vorrichtung ermöglicht. Die Auflage nimmt während der Übergabe die teilweise erheblichen Gewichtskräfte der Ballen direkt auf und leitet sie konstruktiv geschickt in den Rahmen, wobei sie gleichzeitig als Verbindungs- und

Verstärkungselement des Rahmens dient.

Der Antrieb des Schwenkbügels und die Bügelkonstruktion selbst können dementsprechend vorteilhaft gegenüber dem zuvor genannten Stand der Technik wesentlich leichter und kostengünstiger ausgeführt werden, weil das Ballengewicht nicht von dem Bügel getragen werden muss. Für ein noch leichteres Abrollen des Ballens an dem Bügel beim Vorschub, ist der Bügel vorzugsweise endseitig mit einer Walze ausgestattet, welche sich an der Zylinderfläche des Ballens abrollt und so auch Schäden an der Netz- oder Garnbindung des Ballens vermeidet.

Da in der Regel bei der Übergabe von der Presse zum Wickeltisch aufgrund konstruktiver Gegebenheiten auch ein Höhenunterschied in Richtung nach oben zu überwinden ist, ist die Übergabeeinrichtung der erfindungsgemäßen Press- Wickelvorrichtung derart gestaltet, dass der Ballen während seines Transportes zum Wickeltisch noch vor dem Erreichen der Endlage des kraftbetriebenen Weges des Übergabebügels die höchste Position überwunden hat und durch Schwerkraft weiter auf den Wickeltisch rollt.

Der Wickeltisch, der sich vorteilhaft bei der Übergabe in eine in Fahrtrichtung geschwenkte Übergabeposition befindet, verschwenkt daraufhin mit dem Ballen in eine horizontale Wickelposition, wobei der Übergabebügel ein Zurückrollen des Ballen wirksam verhindert.

Um diesen Übergabevorgang schnellstmöglich durchführen zu können, wird nach dem Hauptmerkmal der Erfindung vorgeschlagen, den Antrieb des Übergabebügels derart zu gestalten, dass sich an dem kraftbetriebenen Schwenkweg eine weitere Verschwenkmöglichkeit des Bügels anschließt. In der Praxis bedeutet das, dass der Übergabebügel durch Schwerkraft bzw. vorzugsweise noch durch Federkraft unterstützt weiter in Richtung Wickeltisch verschwenken kann, solange kein Wiederstand dieses verhindert. Durch diese erfinderische Lösung werden besonders im Durchmesser kleinere Ballen nach ihrer Übergabe auf den Wickeltisch gegen ein Zurückrollen wirkungsvoll gesichert, worauf der Wickeltisch sofort in Wickelposition geschwenkt werden kann.

Die Gefahr, dass ein sich von der Übergabe noch bewegender (auspendelnder) Ballen dabei nach hinten vom Wickeltisch rollt, wird durch die erfindungsgemäße Ausführung der Übergabeeinrichtung ebenfalls wirkungsvoll unterbunden, da durch den zusätzlichen Freigang des Übergabebügels auch Ballen verschiedener Durchmesser sofort sicher in ihrer Lage fixiert werden, wodurch die Prozesssicherheit insbesondere in Hanglagen wesentlich erhöht und wertvolle Prozesszeit gewonnen wird.

Zur weiteren Erläuterung der Erfindung wird auf die Zeichnung und auf die nachfolgende Beschreibung eines Ausführungsbeispiels verwiesen.

In der Zeichnung zeigt:
- Fig. 1: eine von schräg hinten gesehene perspektivische Ansicht einer teilweise schematisch Dargestellten erfindungsgemäßen Vorrichtung zum Pressen und Umhüllen von Rundballen;
- Fig. 2: eine perspektivische Teilansicht des Übergabe- und Wickelbereiches der Vorrichtung nach Fig. 1, wobei sich ein Ballen in der Transportphase befindet;
- Fig. 3: eine Ansicht wie Fig. 2, wobei sich der Ballen jedoch in der Übernahmeposition auf den Wickeltisch befindet

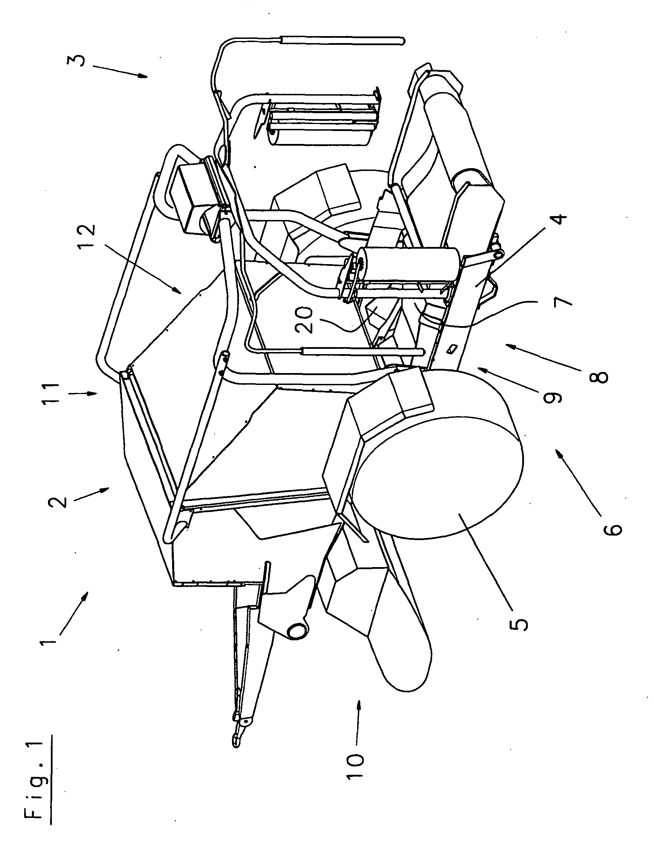

Eine Vorrichtung zum Pressen und Umhüllen von Rundballen 1, wie in Fig. 1 als erfindungsgemäßes Ausführungsbeispiel dargestellt, wird allgemein und im Folgenden dieser Beschreibung als Press- Wickelkombination 1 bezeichnet. Bei der gezeigten Ausführungsform einer Press- Wickelkombination 1 handelt es sich um eine vorzugsweise an einen Schlepper anhängbare kombinierte Maschine, welche aus einer Rundballenpresse 2 und einer Ballenwickeleinrichtung 3 besteht. Beide Einzelmaschinen 2, 3 sind dabei über ein Rahmengestell 4 verbunden, welches sich auf Laufräder 5 abstützt. Weitere Ausführungsformen mit einzelnen bzw. trennbaren Rahmen, sowie Press-Wickelkombinationen als Selbstfahrer sind ebenfalls denkbar und bekannt.

Zwischen den Einzelmaschinen 2,3 der Press- Wickelkombination 1 befindet sich ein Übergabebereich 6 in dem die von der Ballenpresse ausgeworfenen fertig gepressten Ballen aufgenommen und an die Wickeleinrichtung 3 weitertransportiert werden. Da dieser Übergabebereich 6 im besonderen Maße die Funktionssicherheit und die Leistungsfähigkeit der Press- Wickelkombination beeinflusst, sind hier besonders intelligente Lösungen für die Ausführung der Ballenübergabe gefordert.

Die erfindungsgemäße Lösung des Ausführungsbeispiels der Fig. 1 umfasst besonders vorteilhaft einen festen Übergabetisch 7 und Übergabemittel 8 mit einem schwenkbaren Übergabebügel 9, wobei der Übergabetisch 7 wie im Ausführungsbeispiel durch eine geschlossene Blechfläche oder auch nur durch Ballenauflagen aus Rohren, Schienen oder ähnlichem gebildet sein kann.

Während des Erntevorgangs wird durch die Aufnahme- und Fördereinrichtung 10 der Ballenpresse 2 das auf dem Boden liegende Erntegut aufgenommen und in die Presskammer 11 der Ballenpresse 2 befördert, wo es dann zu einem Rundballen geformt und gepresst wird.

Mit welchen Form- und Pressmitteln (Stabförderer, Walzen, Riemen etc.) und nach welchem Pressverfahren (Festkammer, variable Ballenkammer) die Ballenpresse 2 dabei arbeitet, spielt für die erfindungsgemäße Press- Wickelkombination 1 keine Rolle. Besonders durch die erfinderische Lösung der Ballenübergabe sind auch Ballen unterschiedlicher Größe ohne weitere Anpassungsnotwendigkeiten weiterverarbeitbar. Wenn der Ballen in der Presskammer die gewünschte Größe erreicht hat, wird er zwecks Formbeständigkeit mit einem Netz oder Wickelgarn umwickelt und anschließend durch die Ballenauswurföffnung, welche durch das Hochschwenken der rückwärtigen Klappe 12 der Presskammer 11 entsteht, ausgeworfen. Somit gelangt der Ballen 13 direkt auf den Übergabetisch 7, wo ein Sensor das Vorhandensein des Ballens 13 erfasst, worauf die weitere Übergabe eingeleitet wird.

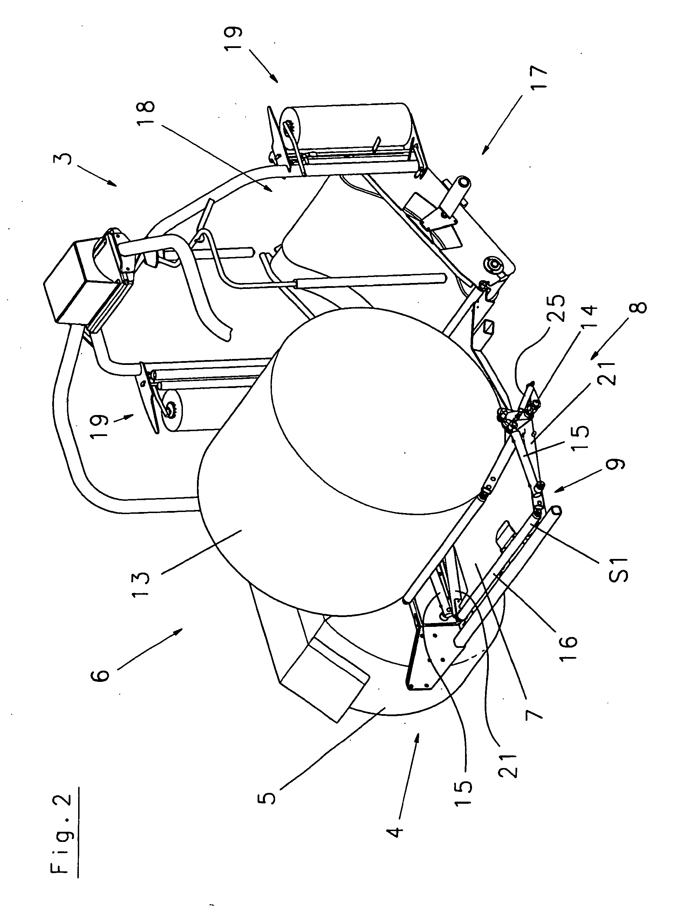

Fig. 2 zeigt zur besseren Verdeutlichung des Übergabevorgangs eine teils schematische perspektivische Ansicht des Übergabebereichs 6 und der Wickeleinrichtung 3 der Press- Wickelkombination nach Fig. 1, wobei verdeckende Bauteile entfernt sind.

Im weiteren Verlauf der Ballenübergabe wird jetzt der auf dem Übergabetisch 7 befindliche Ballen 13 von dem aus seiner Grundstellung S1 hochschwenkenden Übergabebügel 9 erfasst und vorzugsweise rollend in Richtung Wickeleinrichtung 3 bewegt. Um möglichst eine rollende Bewegung des Ballens 13 zu erreichen und dabei dessen Bindung nicht zu beschädigen, ist die obere, an der Mantelfläche des Ballens 13 anliegende Querverbindung des Übergabebügels 9 als Walze 16 ausgeführt. Die Schwenkbewegung des Übergabebügels 9 um die Schwenkachse 14 wird im gezeigten Ausführungsbeispiel durch die Hydraulikzylinder 15 angetrieben, wobei alternative Stellglieder jeglicher Art hier ebenfalls denkbar sind.

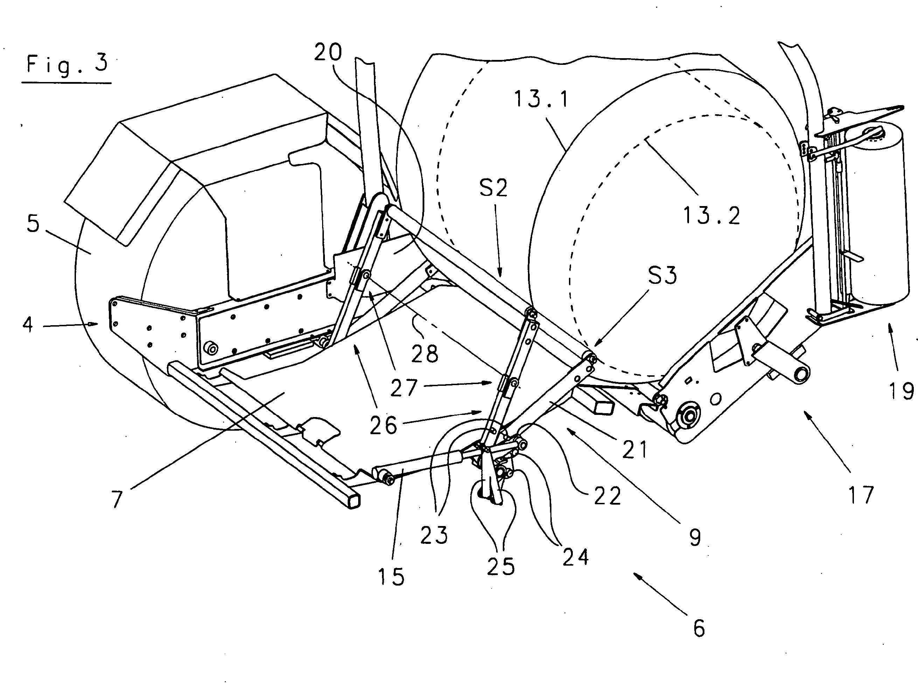

Durch die rampenartige Formgebung des Übergabetisches 7, wird der Ballen 13 gleichzeitig nach hinten und nach oben befördert bis das er den höchsten Punkt überwunden hat und von dort in eine Art Aufnahmemulde, welche vom in Aufnahmeposition nach vorne verschwenkten Wickeltisch 17 der Wickeleinrichtung 3 gebildet wird, rollt. Fig. 2 zeigt einen Ballen 13, der sich während der Übergabe auf dem ansteigenden Bereich des Übergabetisches 7 befindet mit der entsprechenden Stellung des Übergabebügels 9. Zusätzlich zu dieser Zwischenposition des Übergabebügels 9 ist der Übergabebügel 9 in Fig. 2 wie bereits erwähnt in seiner Grundstellung S1 dargestellt. Der Übergabebügel 9 wird durch die Hydraulikzylinder 15 bis zu seiner in Fig. 3 dargestellten Position S2 aktiv angetrieben verschwenkt, wobei dann die Walze 16 noch soeben an einem Ballen 13 mit größtmöglichen Durchmesser, der sich wie ebenfalls aus Fig. 3 ersichtlich in der Aufnahmeposition des Wickeltisches 17 befindet, anliegt. Somit wird durch den Übergabebügel 9 gewährleistet, dass der von der höchsten Position des Übergabetisches 7 in die Aufnahmemulde 18 des Wickeltisches 17 gerollte Ballen 13 in dieser Position fixiert wird. Durch den, für die Übernahme des Ballens in Fahrtrichtung verschwenkten Wickeltisch 17 wird eine derart stark ausgeformte Aufnahmemulde 18 geschaffen, dass ein Überrollen des Wickeltisches 17 nach hinten durch den Ballen 13 ohne weitere Ballenstoppmittel auch bei Hangaufwärtsfahrt ausgeschlossen ist. Ein Zurückrollen des Ballens 13 aus der Übernahmeposition auf den Übergabetisch 7 nach vorne wird auch in Extremsituationen wie z. B. Hangabwärtsfahrt durch den Übergabebügel 9 wirkungsvoll verhindert. Die sofortige Fixierung des Ballens 13 in der Aufnahmemulde 18 des Wickeltisches 17 durch den Übergabebügel 9 nimmt dem Ballen sofort jede weitere Bewegungsenergie, worauf ein sofortiges Verschwenken des Wickeltisches 17 in seine horizontale Wickelposition erfolgt, was wiederum das Startsignal für das Zurückschwenken des Übergabebügels in seine Grundstellung S1 ist.

Der Ballen auf dem Wickeltisch 17 wird nun in bekannter Weise durch ihn umkreisende Folienspender 19 bei gleichzeitiger durch den Wickeltisch 17 angetriebener Drehung des Ballens 13 um seine Zylinderachse mit Folie umwickelt, bis er luftdicht und haltbar verpackt ist. Durch ein weites Verschwenken des Wickeltisches 17 nach hinten, rollt der verpackte Ballen 13 vom Wickeltisch 17 und wird so auf dem Feld abgelegt.

Während der gesamten Übergabe des Ballens 13 wird der Ballen 13 durch ortsfeste, am Rahmengestell 4 im Übergabebereich 6 angeordnete seitliche Führungen 20 derart geführt, dass eine sichere Übergabe unter allen Extrembedingungen, beispielsweise ungleichmäßige, nicht zylindrische Ballen 13 oder Fahren quer zum Hang gewährleistet ist.

Die bisher beschriebene Funktion und Wirkungsweise der Übergabemittel 8 bezog sich auf die Ballenübergabe eines Ballens 13.1 mit größtmöglichem mit der Ballenpresse 2 der Press- Wickelkombination 1 herstellbaren Durchmesser.

Durch die erfinderische Konstruktion der Übergabemittel 8 einer erfindungsgemäßen Press- Wickelkombination 1 ist es jedoch möglich, bei Erhaltung der bereits beschriebenen Vorteile eine Ballenpresse 2 mit variabler Ballengröße einzusetzen und die Ballen 13 unterschiedlicher Größe schnell und sicher zur Wickeleinrichtung 3 zu übergeben, ohne Einstellungen zur Durchmesseranpassung vornehmen zu müssen. Die Übergabe eines kleineren, als mit maximalen Durchmesser gefertigten Ballens 13 erfolgt so wie zuvor beschrieben bis zu der Position, wo der Ballen 13.2 durch den Übergabebügel 9 über die höchste Stelle (Rampe ) des Übergabetisches 7 befördert wird und dann im Normalfall durch Schwerkraft in die Aufnahmemulde 18 des Wickeltisches 17 rollt. Der Übergabebügel 9 verschwenkt dabei durch die Stellmittel 15 kraftangetrieben in die Endlagenposition S2, wobei er dann allerdings aufgrund des kleineren Durchmessers des Ballens 13.2 im Normalfall nicht mehr an diesem anliegt und den Ballen 13.2 somit auch nicht fixieren kann. Erschwerend für einen weiteren sicheren Prozessablauf kommt hinzu, das der Ballen 13.2 von der Wickeltischmulde 18 nicht formschlüssig aufgenommen wird, da diese einem Ballen 13.1 mit maximalen Ballendurchmesser angepasst ist. Um also Ballen 13 mit variablen Durchmessern mit allen zuvor beschriebenen Vorteilen sicher und schnell in der Übergabeposition fixieren zu können, sind ebenso variable Endlagenpositionen des Übergabebügels 9 notwendig. Diese Notwendigkeit zur Erfüllung der Rückhalte- und Fixierfunktion des Übergabebügels 9 über den gesamten möglichen Durchmesserbereich der Ballen 13 der Press-Wickelkombination ist im hier beschriebenen erfindungsgemäßen Ausführungsbeispiel besonders geschickt mit sehr einfachen Mitteln funktionssicher gelöst worden. Dadurch, dass die Hydraulikzylinder 15 nicht direkt an den Schwenkarmen 21 des Übergabebügels 9 angreifen, sondern an Mitnehmerhebeln 22, die über die Anlage an Mitnehmer 23, 24 der Schwenkarme 21 diese und damit den Übergabebügel 9 schwenkbeweglich antreiben, wird erfinderisch erreicht, dass der Übergabebügel 9 einen antriebslosen Freigang zusätzlich zu seinem angetriebenen Schwenkbereich aufweist.

Während des Ballentransportes in Richtung Wickeleinrichtung fahren die Hydraulikzylinder 15 um ihren Hubweg aus, bis sie ihre Endlage erreicht haben. Über die Mitnehmerhebel 22 wird der Übergabebügel 9 gleichzeitig mitverschwenkt, weil seine hinteren Mitnehmer 24 dabei durch die Gegenkraft, die der zu transportierende Ballen 13 auf den Übergabebügel 9 ausübt, an den Mitnehmerhebeln 22 anliegen. Ab der höchsten Position des Übergabetisches 7, ab der der Ballen 13 durch sein Eigengewicht weiter in die Aufnahmemulde 18 des Wickeltisches 17 rollt, schwenkt der Übergabebügel 9 antriebslos weiter in Richtung Wickeleinrichtung 3, so weit der Ballen 13.2 dieses zulässt, da die Walze 16 des Übergabebügels 9 weiterhin an dem Ballen 13.2 anliegt. Die Schwenkbewegung der Mitnehmerhebel 22, die den angetriebenen Schwenkweg des Übergabebügels 9 vorgibt, ist währenddessen mit Erreichen der Hubendlage der Hydraulikzylinder 15 zum Stillstand gekommen. So lange sich der Ballen 13.2 nach hinten in Richtung Wickeltisch 17 bewegt, verschwenkt der Übergabebügel 9 im Kontakt mit dem Ballen 13.2 antriebslos, durch seine Schwerkraft bzw. im Ausführungsbeispiel durch Kraftspeicher in Form von Federn 25 unterstützt weiter, bis der Ballen 13.2 je nach Durchmesser früher oder später in der Aufnahmemulde 18 nach hinten zur Anlage kommt.

In dieser Position, die in Fig. 3 durch den dargestellten kleinen Ballen 13.2 und dem in der entsprechenden Position S3 befindlichen Übergabebügel ersichtlich wird, wirkt der Übergabebügel 9 durch die erfinderische Lösung wiederum als Rückhalter und fixiert den Ballen 13.2 in seiner Lage. Durch die geschickte Anordnung der Schwenkachse 14 zur Höhenlage des Ballens 13.2 liegt die Walze 16 dabei unterhalb einer gedachten Linie zwischen der Schwenkachse 14 und der Rotationsachse des Ballens 13.2, was bewirkt, das der Ballen 13.2 den Übergabebügel 9 nicht zurückschwenken kann und so sofort fixiert in seiner Lage verbleibt.

Nach dem dann folgendem Verschwenken des Wickeltisches 17 in seine Wickelposition wird der Übergabebügel 9 indirekt durch die wieder einfahrenden Hydraulikzylinder 15 aufgrund der Anlage seiner vorderen Mitnehmer 23 an den Mitnehmerhebeln 22 wieder in seine Grundstellung S1 verschwenkt. Durch die besonders vorteilhafte Anordnung der Federn 25 am Übergabemittel 8 der erfindungsgemäßen Press- Wickelkombination 1 des Ausführungsbeispiels, halten diese den Übergabebügel 9 in seiner Grundstellung S1 derart nach unten, dass er sich nicht durch eventuelle Fahreinflüsse beeinflusst innerhalb seines Freigangs unkontrolliert bewegt.

Somit ist durch die erfindungsgemäße Ausführung der Übergabemittel 8 auch bei variablen Ballengrößen unter allen Bedingungen eine sofortige sichere Ballenfixierung nach seiner Übergabe in die Aufnahmemulde 18 des Wickeltisches 17 sichergestellt.

In einer weiteren Ausführungsform der Übergabemittel 8 einer erfindungsgemäßen Press- Wickelkombination 1, kann der Übergabebügel auch wie in Fig. 3 am Übergabebügel 9, der in der Endlagenposition S2 des angetriebenen Schwenkbereiches beispielhaft schematisch dargestellt ist, mit mehrteiligen, klappbaren Schwenkarmen 26 ausgestattet sein. Durch eine derartige einerseits aufwändigere Ausführungsform könnte andererseits wertvolle Prozesszeit gewonnen werden. In der bisher beschriebenen Ausführungsform mit festem Übergabebügel 9 kann die heckseitige Klappe 12 der Ballenpresse 2 nach erfolgtem Ballenauswurf erst wieder geschlossen werden wenn sich der Übergabebügel 9 nach der Ballenübergabe wieder in seiner Grundstellung S1 befindet, da er ansonsten mit der Klappe 12 kollidieren würde. Bei einer Ausführungsform mit klappbaren Übergabebügel kann die Klappe 12 geschlossen werden, sobald sich der Ballen 13 und der Übergabebügel 9 außerhalb ihres Schwenkbereiches befinden. Die mehrteiligen Schwenkarme 26 des Übergabebügels sind dabei derart mit einem Gelenk 27 verbunden, dass sie nur in eine Richtung ein Einknicken des Übergabebügels 9 ermöglichen und in der Gegenrichtung die notwendigen Kräfte für den Transport des Ballens 13 übertragen können. So kann der Übergabebügel 9 bei geschlossener Klappe 12 zurückverschwenkt werden, da er beim Auftreffen auf die geschlossene Klappe 12 oder separaten Führungselementen um die Achse 28 einknickt, weiter in seine Grundstellung S1 verschwenkt und dort wieder in seine gestreckte Lage ausklappt, weil unterhalb der Presskammer der Platz dazu vorhanden ist. Das Halten der mehrteiligen Schwenkarme in der gestreckten Stellung bzw. das Wiederausklappen könnte dabei durch Federn oder andere bekannte Kraftspeicher unterstützt werden. In weiteren Ausführungsformen sind auch gesteuerte Stellantriebe für diese Funktion denkbar. Auch weitere Lösungen zur Ermöglichung des Zurückschwenkens des Übergabebügels 9 bei geschlossener Klappe 12, wie beispielsweise teleskopierbare Schwenkarme 12 des Übergabebügels sind ebenfalls denkbar.

## Patentansprüche

1. Vorrichtung (1) zum Pressen und Umhüllen von Rundballen, insbesondere aus angewelktem Grüngut, Heu, Stroh oder ähnlichen landwirtschaftlichen Halmgütern, wobei die Vorrichtung eine Ballenpresse (2) und eine Wickeleinrichtung (3) umfasst, welche über zumindest einem sich auf Laufrädern (5) abstützenden Rahmengestell (4) miteinander verbunden sind, wobei zwischen der Ballenpresse (2) und der Wickeleinrichtung (3) aktiv angetriebene Übergabemittel (8) angeordnet sind, welche den Transport eines gepressten Rundballens (13) von einer Ballenauswurföffnung der Ballenpresse (2) zu einer Übergabeposition in Richtung der Umhüllungsvorrichtung zumindest unterstützen und nach erfolgter Verlagerung des Rundballens (13) die Übergabemittel (8) eine Bewegung des Rundballens (13) entgegen seiner Transportrichtung wirksam verhindern, **dadurch gekennzeichnet, dass** die Übergabemittel (8) einen ersten Wirkbereich durch Stellmittel aktiv angetrieben abdecken, wobei sich ***zur Anpassung der Übergabemittel (8) an verschiedene Ballendurchmesser*** ein antriebsfreier zweiter Wirkbereich der Übergabemittel (8) an den ersten Wirkbereich anschließt.

2. Vorrichtung (1) zum Pressen und Umhüllen von Rundballen nach Anspruch 1, **dadurch gekennzeichnet, dass** die Übergabemittel (8) im zweiten Wirkbereich durch ihre Schwerkraft wirken.

3. Vorrichtung (1) zum Pressen und Umhüllen von Rundballen nach Anspruch 1 oder 2, **dadurch gekennzeichnet, dass** die Übergabemittel (8) im zweiten Wirkbereich durch Kraftspeicher unterstützt wirken.

4. Vorrichtung (1) zum Pressen und Umhüllen von Rundballen nach einem oder mehreren der vorhergehenden Ansprüche, **dadurch gekennzeichnet, dass** die Übergabemittel (8) im ersten Wirkbereich eine Transportfunktion ausüben.

5. Vorrichtung (1) zum Pressen und Umhüllen von Rundballen nach einem oder mehreren der vorhergehenden Ansprüche, **dadurch gekennzeichnet, dass** die Übergabemittel (8) im zweiten Wirkbereich ausschließlich eine Rückhaltefunktion ausüben.

6. Vorrichtung (1) zum Pressen und Umhüllen von Rundballen nach einem oder mehreren der vorhergehenden Ansprüche, **dadurch gekennzeichnet, dass** in dem Übergabebereich (6) zwischen der Ballenpresse (2) und der Wickeleinrichtung (3) zumindest eine ortsfeste Ballenauflage (7) und Übergabemittel (8) angeordnet sind.

7. Vorrichtung (1) zum Pressen und Umhüllen von Rundballen nach Anspruch 6, **dadurch gekennzeichnet, dass** die zumindest eine ortsfeste Ballenauflage (7) im Übergabebereich (6) einen Übergabetisch (7) ausbildet.

8. Vorrichtung (1) zum Pressen und Umhüllen von Rundballen nach einem oder mehreren der vorhergehenden Ansprüche, **dadurch gekennzeichnet, dass** die Übergabemittel (8) einen verschwenkbaren Übergabebügel (9) mit seitlichen Schwenkarmen (21) umfassen.

9. Vorrichtung (1) zum Pressen und Umhüllen von Rundballen nach Anspruch 8, **dadurch gekennzeichnet, dass** die gegenüber einer ortsfesten Schwenklagerung (14) endseitige Verbindung der Schwenkarme (21) durch eine Walze (16) gebildet wird.

10. Vorrichtung (1) zum Pressen und Umhüllen von Rundballen nach Anspruch 8, **dadurch gekennzeichnet, dass** die Schwenkarme (21) des Übergabebügels (9) mehrteilig ausgebildet sind.

11. Vorrichtung (1) zum Pressen und Umhüllen von Rundballen nach Anspruch 10, **dadurch gekennzeichnet, dass** die zumindest zwei Teile eines Schwenkarmes (21) durch ein Gelenk ( ) verbunden sind.

12. Vorrichtung (1) zum Pressen und Umhüllen von Rundballen nach Anspruch 10, **dadurch gekennzeichnet, dass** durch die mehrteilige Ausbildung der Schwenkarme (21) der Übergabebügel (9) in sich zumindest in eine Richtung klappbar ist.

13. Vorrichtung (1) zum Pressen und Umhüllen von Rundballen nach einem oder mehreren der vorhergehenden Ansprüche, **dadurch gekennzeichnet, dass** der Übergabebügel (9) durch Stellmittel (15) indirekt schwenkangetrieben ist.

14. Vorrichtung (1) zum Pressen und Umhüllen von Rundballens nach Anspruch 13, **dadurch gekennzeichnet, dass** der indirekte Schwenkantrieb des Obergabebügels (9) einen Freigang des Übergabebügels (9) zu seinem Stellantrieb zulässt.

15. Vorrichtung (1) zum Pressen und Umhüllen von Rundballen nach Anspruch 14, **dadurch gekennzeichnet, dass** der Freigang des Übergabebügels (9) zu seinem Stellantrieb dem antriebsfreien zweiten Wirkbereich der Übergabemittel (8) entspricht.

## Claims

1. Apparatus (1) for pressing and wrapping round bales, particularly from wilted green crops, hay, straw or similar agricultural stalked crops, wherein the apparatus comprises a bale press (2) and a wrapping arrangement (3) which are connected to one another by at least one rack (4) supported on wheels (5), wherein actively driven transfer means (8) are arranged between the bale press (2) and the wrapping arrangement (3), which means at least support the transfer of a pressed round bale (13) from a bale ejection opening of the bale press (2) to a transfer position in the direction of the wrapping apparatus, and after the round bale (13) has been displaced, the transfer means (8) actively prevent the round bale (13) from moving against its direction of transfer, **characterised in that** the transfer means (8) cover a first active region by adjusting means in an actively driven manner, wherein a drive-free second active region of the transfer means (8) follows on to the first active region for adapting the transfer means (8) to different bale diameters.

2. The apparatus (1) for pressing and wrapping round bales according to claim 1, **characterised in that** the transfer means (8) act in the second active region by means of their force of gravity.

3. The apparatus (1) for pressing and wrapping round bales according to claim 1 or 2, **characterised in that** the transfer means (8) act in the second active region supported by accumulators.

4. The apparatus (1) for pressing and wrapping round bales according to one or more of the preceding claims, **characterised in that** the transfer means (8) perform a transfer function in the first active region.

5. The apparatus (1) for pressing and wrapping round bales according to one or more of the preceding claims, **characterised in that** the transfer means (8) exclusively perform a retaining function in the second active region.

6. The apparatus (1) for pressing and wrapping round bales according to one or more of the preceding claims, **characterised in that** at least one fixed bale support (7) and transfer means (8) are arranged in the transfer region (6) between the bale press (2) and the wrapping arrangement (3).

7. The apparatus (1) for pressing and wrapping round bales according to claim 6, **characterised in that** the at least one fixed bale support (7) forms a transfer table (7) in the transfer region (6).

8. The apparatus (1) for pressing and wrapping round bales according to one or more of the preceding claims, **characterised in that** the transfer means (8) comprise a pivotable transfer strap (9) with lateral swivel arms (21).

9. The apparatus (1) for pressing and wrapping round bales according to claim 8, **characterised in that** the connection of the swivel arms (21), on the end side opposing a fixed swivel bearing (14), is formed by a roller (16).

10. The apparatus (1) for pressing and wrapping round bales according to claim 8, **characterised in that** the swivel arms (21) of the transfer strap (9) are designed in several sections.

11. The apparatus (1) for pressing and wrapping round bales according to claim 10, **characterised in that** the at least two sections of a swivel arm (21) are connected by a joint().

12. The apparatus (1) for pressing and wrapping round bales according to claim 10, **characterised in that** the transfer strap (9) can be folded in at least one direction due to the multi-section design of the swivel arms (21).

13. The apparatus (1) for pressing and wrapping round bales according to one or more of the preceding claims, **characterised in that** the transfer strap (9) is indirectly driven in a pivoting manner by adjusting means (15).

14. The apparatus (1) for pressing and wrapping round bales according to claim 13, **characterised in that** the indirect swivel drive of the transfer strap (9) allows free passage of the transfer strap (9) to its adjusting drive.

15. The apparatus (1) for pressing and wrapping round bales according to claim 14, **characterised in that** the free passage of the transfer strap (9) to its adjusting drive corresponds to the drive-free second active region of the transfer means (8).

## Revendications

1. Dispositif (1) pour comprimer et envelopper des balles rondes notamment des balles de produits verts, séchés, de foin, de paille ou de ce type de produits agricoles à tige,
ce dispositif comprenant une presse à balle (2) et une installation d'enroulement (3) reliée l'une à l'autre par au moins un châssis (4) appuyé sur des roues de roulement (5),
des moyens de transfert (8) entraînés de manière active étant prévus entre la presse à balle (2) et l'installation d'enroulement (3), ces moyens assistant au moins le transport d'une balle ronde (13), pressée, de l'orifice d'éjection de balle de la presse (2) dans une position de transfert en direction du dispositif d'enveloppement, et une fois la balle ronde, déplacée, les moyens de transfert (8) s'opposent activement aux mouvements de la balle ronde (13) dans la direction opposée à sa direction de transport,
**caractérisé en ce que**
les moyens de transfert (8) couvrent une première plage active par des moyens d'actionnement entraînés de façon active, et pour adapter les moyens de transfert (8) à différents diamètres de balle, une seconde plage active des moyens de transfert (8), sans entraînement, fait suite à la première plage active.

2. Dispositif (1) pour presser et envelopper des balles rondes selon la revendication 1,
**caractérisé en ce que**
les moyens de transfert (8) agissent par la gravité dans la seconde plage.

3. Dispositif (1) pour presser et envelopper des balles rondes selon la revendication 1 ou 2,
**caractérisé en ce que**
les moyens de transfert (8) sont assistés par un accumulateur de force dans la seconde plage active.

4. Dispositif (1) pour presser et envelopper des balles rondes selon l'une ou plusieurs des revendications précédentes,
**caractérisé en ce que**
les moyens de transfert (8) exercent une fonction de transport dans leur première plage active.

5. Dispositif (1) pour presser et envelopper des balles rondes selon l'une des revendications précédentes,
**caractérisé en ce que**
les moyens de transfert (8) exercent uniquement une fonction de retenue dans leur seconde plage active.

6. Dispositif (1) pour presser et envelopper des balles rondes selon l'une ou plusieurs des revendications précédentes,
**caractérisé par**
au moins un appui fixe de balle (7) et des moyens de transfert (8) dans la zone de transfert (6) entre la presse à balle (2) et l'installation d'enroulement (3).

7. Dispositif (1) pour presser et envelopper des balles rondes selon la revendication 6,
**caractérisé en ce qu'**
au moins l'appui fixe de balle (7) dans la zone de transfert (6) constitue un plateau de transfert (7).

8. Dispositif (1) pour presser et envelopper des balles rondes selon l'une ou plusieurs des revendications précédentes,
**caractérisé en ce que**
les moyens de transfert (8) comportent un arceau de transfert (9), basculant, ayant des bras latéraux basculants (21).

9. Dispositif (1) pour presser et envelopper des balles rondes selon la revendication 8,
**caractérisé en ce que**
la liaison des extrémités des bras basculants (21) par rapport à un palier de basculement fixe est constituée par un cylindre (16).

10. Dispositif (1) pour presser et envelopper des balles rondes selon la revendication 8,
**caractérisé en ce que**
les bras basculants (21) de l'arceau de transfert (9) sont réalisés en plusieurs parties.

11. Dispositif (1) pour presser et envelopper des balles rondes selon la revendication 10,
**caractérisé en ce qu'**
au moins les deux parties d'un bras basculant (21) sont reliées par une articulation.

12. Dispositif (1) pour presser et envelopper des balles rondes selon la revendication 10,
**caractérisé en ce que**
la réalisation des bras basculants (21) en plusieurs parties de l'arceau de transfert (9) se rabat dans au moins une direction.

13. Dispositif (1) pour presser et envelopper des balles rondes selon l'une ou plusieurs des revendications précédentes,
**caractérisé en ce que**
l'arceau de transfert (9) est indirectement entraîné en basculement par des moyens actionnement (15).

14. Dispositif (1) pour presser et envelopper des balles rondes selon la revendication 13,
**caractérisé en ce que**
l'entraînement en basculement, indirect, de l'arceau de transfert (9) autorise une marche à vide de l'arceau de transfert (9) par rapport à son entraînement actionnement.

15. Dispositif (1) pour presser et envelopper des balles rondes selon la revendication 14,
**caractérisé en ce que**
la marche libre de l'arceau de transfert (9) par rapport à son actionneur correspond à la seconde plage active sans entraînement du moyen de transfert (8).
